# EUROPÄISCHE PATENTSCHRIFT

(11) **EP 0 285 907 B1**
(45) Veröffentlichungstag und Bekanntmachung des Hinweises auf die Patenterteilung: **04.08.1993**
(21) Anmeldenummer: 88104606.4
(22) Anmeldetag: 23.03.1988
(51) Int. Cl.: G03G 15/04, G03B 27/52

(54) **Elektrofotografische Kopiervorrichtung**
Electophotographic copying device
Dispositif de copie électophotographique

(30) Priorität: 07.04.1987 DE 3711701
(43) Veröffentlichungstag der Anmeldung: 12.10.1988
(73) Patentinhaber: Kempf, Ulrich, D-21465 Wentorf (DE)
(72) Erfinder: Kempf, Ulrich, D-21465 Wentorf (DE)
(74) Vertreter: Patentanwälte Hauck, Graalfs, Wehnert, Döring, Siemons

(56) Entgegenhaltungen:
- DE-A- 3 620 070
- JP-A- 6 214 183
- US-A- 4 648 707
- IBM TECHNICAL DISCLOSURE BULLETIN, Band 23, Nr. 6, November 1980, Seiten 2362-2363, New York, US; D.A. KIGHTLINGER et al.: "Non-Impact printer using optical fibers"
- XEROX DISCLOSURE JOURNAL, Band 2, Nr. 3, Mai/Juni 1977, Seiten 69-70, Harvant, Connecticut, US; A. CHERIAN: "A transparency copying machine"
- PATENT ABSTRACTS OF JAPAN, Band 10, Nr. 64 (P-436)[2121], 14. März 1986; & JP-A-60 205 555 (MATSUSHITA DENKI SANGYO K.K.) 17-10-1985

## Beschreibung

Die Erfindung bezieht sich auf eine Vorrichtung zur Herstellung von Sofortbildern von beliebigen Objekten mit einer elektrofotografischen Kopiervorrichtung nach dem Oberbegriff des Patentanspruchs 1.

Eine solche Kopiervorrichtung ist aus dem jüngsten Prospekt der Firma Canon zu dem Farbkopiergerät "COLOR LASER COPIER-1" bekannt. Aus dieser Veröffentlichung ist es bekannt, auf ein Kopiergerät einen Dia-Projektor aufzusetzen, der mit seinem Projektionsobjektiv über einen Umlenkspiegel auf das Eintrittsfenster der Kopiervorrichtung abbildet. Auf diese Weise können elektrofotografische Kopien von Dias angefertigt werden.

Aus der US-A-4 367 033 ist ein Lesegerät für Mikrofiche oder Mikrofilme bekanntgeworden, welches einen Projektor sowie ein Spiegelsystem aufweist zur Sichtbarmachung des Mikrobildes auf einem Bildschirm. In das Lesegerät ist zugleich eine Kopiervorrichtung integriert, um den sich im Projektor befindlichen Mikrofilmabschnitt zu kopieren. Zu diesem Zweck wird ein Spiegel verschwenkt, damit eine Umlenkung des Projektorstrahls auf die fotosensitive Trommel des Kopierers vorgenommen werden kann.

Aus der DE-A-36 20 070 ist ein Kopierer bekannt, mit dem wahlweise übliche Vorlagen kopiert werden können oder der auf einen Schirm geschriebene Inhalt. Der Schirm ist ein Gewebe, das zu der einen oder anderen Richtung wahlweise aufwickelbar ist. Mit Hilfe einer geeigneten Spiegelvorrichtung wird der Inhalt des Schirms auf den Kopierer gelenkt, wobei die Aufwickelvorrichtung mit der Trommel des Kopierers synchron betrieben werden muß. Soll eine Vorlage kopiert werden, ist der Spiegel unterhalb des Schlitzes umzuschwenken. Der fahrbare Schirm wird mithin in gleicher Weise abgetastet, wie dies bei einer Vorlage auf der Vorlagenscheibe der Fall ist.

Aus der JP-A-62- 14 183 (US-A-4 702 586)ist eine ähnliche Vorrichtung wie in der zuletzt genannten Druckschrift bekanntgeworden.

Eine Schreibfläche an einer Tafel besteht aus einem Gewebe, das von drehbaren Rollen getragen ist. Hinter der Schreibebene befindet sich ein optisches System aus Spiegeln und eine Abbildungslinse, welche das Licht vom hinteren Strang des umlaufenden Gewebes auf das fotoempfindliche Element des Kopierers abbildet.

Der Erfindung liegt die Aufgabe zugrunde, eine Vorrichtung zur Herstellung von Sofortbildern von beliebigen Projekten mit Hilfe einer elektrofotografischen Kopiervorrichtung zu schaffen.

Diese Aufgabe wird gelöst durch die Merkmale des Patentanspruchs 1.

Die erfindungsgemäße Vorrichtung umfaßt eine herkömmliche elektrofotografische Kopiervorrichtung, wie sie in den verschiedensten Ausführungsformen in großer Zahl Verwendung findet. Sie weist eine mattierte Fresnellinse auf, die im Bereich der Vorlagenscheibe eingesetzt wird. An der Kopiervorrichtung ist ein Kameraobjektiv angebracht mit einer Achse parallel zur Ebene der Vorlagenscheibe, das das jeweilige Objekt über einen Umlenkspiegel in der Ebene der Fresnellinse bzw. Vorlagenscheibe abbildet. Bei geeigneter Auswahl des Kameraobjektivs und ggf. ausreichender Abdeckung zwischen Kameraobjektiv und Vorlagenscheibe lassen sich auf diese Weise Sofortbilder von außen liegenden Objekten erstellen, vergleichbar der Wirkung einer Sofortbildkamera.

Bei einer alternativen Lösung der erfindungsgemäßen Aufgabe gemäß Anspruch 2 ist im Bereich der Vorlagenscheibe eine milchscheibenartig mattierte Fresnellinse angeordnet. An der Kopiervorrichtung ist ein Lichtleiter anbringbar, der an einem Ende ein Objektiv aufweist und der das Objekt über einen Umlenkspiegel in der Ebene der Fresnellinse bzw. der Vorlagenscheibe abbildet. Auf diese Weise können zum Beispiel mittels Endoskopie erfaßte innere Körperregionen abgebildet und die Abbildung sofort ohne einen fotochemischen Entwicklungsprozeß zur Verfügung gestellt werden. Im übrigen ist es mit der erfindungsgemäßen Vorrichtung auch möglich, ein Bild auf einem Röntgenschirm auf die Belichtungsvorrichtung der Kopiervorrichtung zu bringen und ein Papierbild vom Röntgenbild zu erhalten.

Nach einer Ausgestaltung der Erfindung ist vorgesehen, daß das Objektiv mit einer Einrichtung zur Veränderung der Scharfeinstellung versehen ist. Dies ist bei der Reproduktion dreidimensionaler Objekte von Bedeutung.

Eine weitere Ausgestaltung der Erfindung sieht vor, daß das Objektiv mit einer Einrichtung zur Veränderung der Blendengröße versehen ist. Auch diese ist bei der Abbildung von außen liegenden Objekten von Vorteil.

Eine weitere Ausgestaltung der Erfindung sieht vor, daß Einrichtungen zur Objektausleuchtung vorgesehen sind. Auf diese Weise kann die für den elektrofotografischen Kopierprozeß unter Berücksichtigung von Lichtverlusten bei der Projektion erforderliche hohe Objektausleuchtung sichergestellt werden.

Dadurch, daß erfindungsgemäß der Raum zwischen Objektiv und der Vorlagenscheibe lichtdicht umschlossen ist, kann für den elektrofotografischen Kopierprozeß störender Fremdlichteinfluß ausgeschlossen werden.

Manche Kopiervorrichtungen enthalten Umkehrvorrichtungen, so daß es gleich ist, in welcher Orientierung die Vorlagen im Kopiergerät abgetastet werden. Ist eine derartige Umkehrvorrichtung nicht vorhanden, ist eine Spiegelanordnung zweckmäßig, die das Objekt um 180° dreht, so daß in der Kopiervorrichtung die lagerichtige Abbildung des Objekts stattfindet.

Falls die Ausleuchtung des Objekts zu schwach ist, kann es zweckmäßig sein, einen Restlichtverstärker vorzusehen, der dem Kopierer oder dem Objektiv zugeordnet ist.

In den Zeichnungen sind Zwei Ausführungsbeispiele der Erfindung schematisch dargestellt.
- Fig. 1: zeigt schematisch eine Kopiervorrichtung nach der Erfindung mit einem Kameraobjektiv.
- Fig. 2: zeigt schematisch eine Kopiervorrichtung nach der Erfindung mit einer Lichtfaseroptik.

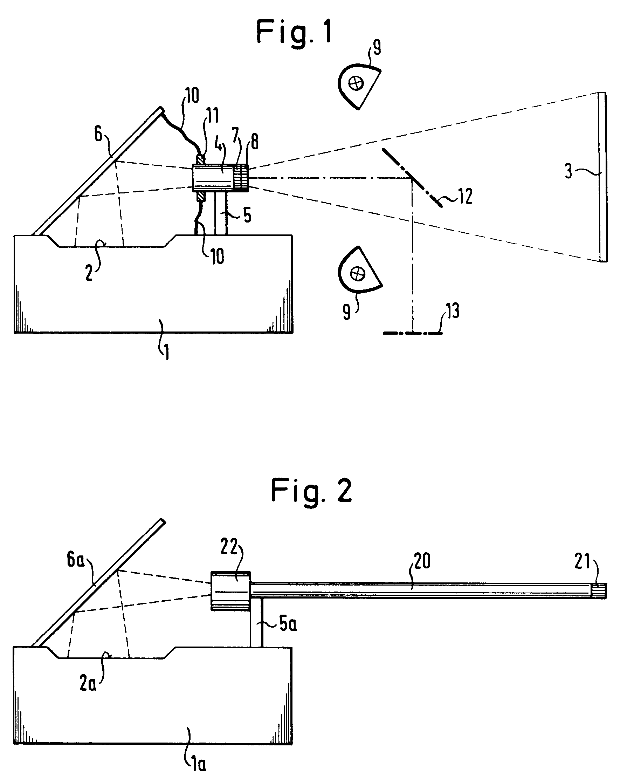

Die Fig. 1 zeigt eine Kopiervorrichtung 1, die als Bürokopiergerät einsetzbar ist und ein Eintrittsfenster 2 aufweist, das in üblicher Weise mit einer Glasplatte abgedeckt ist und bei normalem Kopiervorgang als Vorlagenaufnahme dient. Der nicht dargestellte, üblicherweise vorgesehene, das Eintrittsfenster 2 abdeckende Deckel ist abgenommen bzw. beiseitegeklappt.

Mit der Erfindung soll die Kopiervorrichtung zur Reproduktion eines entfernt aufgestellten Objektes 3 eingesetzt werden. Dieses kann beispielsweise als Vorlagenplatte ausgebildet sein, auf dem großformatige Zeichnungen oder dergleichen angebracht werden.

Die Kopiervorrichtung 1 ist zu diesem Zweck mit einem Objektiv 4 ausgerüstet, das über einen Arm 5 auf der Oberseite der Kopiervorrichtung 1 montiert ist. Das Objektiv 4 ist von geeigneter Ausbildung, also von der Art, die beispielsweise für großformatige Kameras verwendet wird.

Im dargestellten Ausführungsbeispiel verläuft aus Gründen der Zugänglichkeit des Ortes, an dem das Objekt 3 aufgestellt ist, die Achse des Objektives 4 parallel zur Fläche des Eintrittsfensters 2. Es ist daher ein an der Kopiervorrichtung 1 unter 45° befestigter Umlenkspiegel 6 vorgesehen, über den das Objektiv 4 das Objekt 3 auf das Eintrittsfenster 2 abbildet, wie mit gestrichelten Linien angedeutet.

Das Objektiv 4 kann mit fester Fokussierung vorgesehen sein. Vorteilhaft ist jedoch eine Einrichtung zur Scharfeinstellung vorgesehen, die im dargestellten Beispiel als Fokussierdrehring 7 am Objektiv 4 ausgebildet ist. Damit können unterschiedliche Abstände zum Objekt 3 bei exakter Scharfeinstellung berücksichtigt werden.

Weiterhin ist vorteilhaft eine Blendenverstelleinrichtung in Form eines Blendenringes 8 am Objektiv 4 vorgesehen. Damit kann bei Reproduktion dreidimensionaler Gegenstände die Schärfentiefe beeinflußt bzw. bei vorgegebener konstanter Beleuchtung die korrekte Belichtung der Kopiervorrichtung 1 eingestellt werden.

Als Einrichtung zur Veränderung der Brennweite des Objektives 4 kann auch alternativ zum Fokussierdrehring 7 auch eine nicht dargestellte Längsverstelleinrichtung vorgesehen werden, die z.B. eine Gewindespindel enthält, mit der das Objektiv in Richtung seiner Achse verstellt wird, beispielsweise gegenüber dem Arm 5 oder zusammen mit diesem gegenüber der Kopiervorrichtung.

In der Zeichnung sind ferner Leuchten 9 dargestellt, beispielsweise herkömmliche Fotoleuchten, mit denen das Objekt 3 in geeigneter Weise ausgeleuchtet wird.

Bei nicht zu heller Umgebung kann der Raum zwischen Objektiv 4, Umlenkspiegel 6 und Eintrittsfenster 2 freibleiben. Stört aber durch das Eintrittsfenster 2 eintretendes Fremdlicht, so kann vorteilhaft dieser Raum lichtdicht umschlossen werden, wozu die in der Zeichnung angedeutete Abdeckplane 10 vorgesehen ist, die mit einem Ring 11 auf dem Objektiv 4 sitzt und in geeigneter Weise an die Seitenränder des Spiegels 6 sowie an das Gehäuse der Kopiervorrichtung 1 angeschlossen ist.

Das Objektiv 4, das nur für die erfindungsgemäßen Zwecke vorgesehen ist, kann zur Verwendung der Kopiervorrichtung 1 als normaler Bürokopierer abnehmbar, beispielsweise zusammen mit dem Arm 5 abnehmbar, ausgebildet sein und kann beispielsweise zusammen mit dem ebenfalls abnehmbar zu gestaltenden Umlenkspiegel 6 als Nachrüstsatz angeboten werden.

Anstelle des dargestellten Objektives 4, das lediglich eine Blendenverstellung und eine Fokuseinstellung aufweist, kann auch ein sogenanntes Zoomobjektiv vorgesehen sein, das zusätzlich eine Brennweiteneinstellung aufweist. Damit läßt sich auch der Abbildungsmaßstab verändern. Selbstver ständlich ist es möglich, für solche Einstellungszwecke auch die Belichtungseinrichtung der Kopiervorrichtung 1 zu verwenden, die regelmäßig ein Objektiv mit Blendeneinrichtung aufweist und in den meisten Fällen auch eine Brennweitenverstelleinrichtung. Selbstverständlich kann zum Scharfeinstellen auch ein Autofokus vorgesehen werden.

Die erfindungsgemäße Kopiervorrichtung 1 weist, wie auch die eingangs zitierte bekannte Kopiervorrichtung, als Teil ihrer Belichtungseinrichtung, auf die das Objektiv 4 abbildet, eine platten- oder folienförmige Fresnel-Linse auf, die auf das Eintrittsfenster 2 der Kopiervorrichtung 1 aufgelegt ist und der gleichmäßigen gerichteten Formatausleuchtung dient. Dieser Effekt benötigt ferner eine mattscheibenartige rückseitige Mattierung der Fresnel-Linse.

Fig. 2 zeigt schematisch ein Kopiergerät 1a, das oberhalb seines Eintrittsfensters 2a einen Umlenkspiegel 6a aufweist. Der auf der Oberseite des Gerätes lösbar angebrachte Arm 5a hält einen Lichtfaserleiter 20, der am vorderen Ende in bekannter Weise ein Objektiv 21 aufweist. Der Lichtleiter 20 kann z.B. für die medizinische Endoskopie dienen. Das andere Ende des Lichtleiters 20 ist mit einer optischen Vorrichtung 22 verbunden, die z.B. einen Lichtverstärker enthält, von dem ein optischer Strahl auf den Umlenkspiegel 6a gelangt.

Zu Fig. 1 ist noch nachzutragen, daß ein weiterer Umlenkspiegel 12 (strichpunktiert gezeichnet) vorgesehen werden kann, um ein Objekt auf einer Vorlagefläche 13 auf das Objektiv 4 zu lenken. Auf diese Weise wird das Objekt in richtiger Lage in der Kopiervorrichtung abgebildet, wenn diese nicht über eine Umkehrvorrichtung verfügt, welche die Bilder um 180° dreht.

## Patentansprüche

1. Vorrichtung zur Herstellung von Sofortbildern von beliebigen Objekten mit einer elektrofotografischen Kopiervorrichtung (1) mit einer Vorlagenscheibe (2), in deren Bereich eine milchscheibenartig mattierte Fresnellinse angeordnet ist, und mit einem an der Kopiervorrichtung (1) anbringbaren Kameraobjektiv (4), dessen Achse parallel zur Ebene der Vorlagenscheibe (2) verläuft und das über einen Umlenkspiegel (6) das Objekt (3) in der Ebene der Fresnellinse bzw. der Vorlagenscheibe (2) abbildet.

2. Vorrichtung zur Herstellung von Sofortbildern von beliebigen Objekten mit einer elektrofotografischen Kopiervorrichtung (1a) mit einer Vorlagenscheibe (2a), in deren Bereich eine milchscheibenartig mattierte Fresnellinse angeordnet ist, und mit einem an der Kopiervorrichtung (2a) anbringbaren Lichtleiter (20), der an einem Ende ein Objektiv (21) aufweist und der das Objekt über einen Umlenkspiegel (6a) in der Ebene der Fresnellinse bzw. der Vorlagenscheibe (2a) abbildet.

3. Vorrichtung nach Anspruch 1, dadurch gekennzeichnet,daß das Objektiv (4, 21) mit einer Einrichtung (7, 8) zur Veränderung der Scharfeinstellung versehen ist.

4. Vorrichtung nach einem der Ansprüche 1 bis 3, dadurch gekennzeichnet, daß das Objektiv (4) mit einer Einrichtung (8) zur Veränderung der Blendengröße versehen ist.

5. Vorrichtung nach einem der Ansprüche 1 bis 4, dadurch gekennzeichnet, daß Einrichtungen (9) zur Objektausleuchtung vorgesehen sind.

6. Vorrichtung nach einem der Ansprüche 1 oder 3 bis 5, dadurch gekennzeichnet, daß der Raum zwischen Objektiv (4) und der Vorlagenscheibe (2) lichtdicht umschlossen ist (Abdeckung 10).

7. Vorrichtung nach einem der Ansprüche 1 bis 6, dadurch gekennzeichnet, daß dem Objektiv (4) eine Spiegelanordnung vorgeordnet ist, die die abzubildenden Objekte (3) um 180° dreht.

8. Vorrichtung nach Anspruch 2, dadurch gekennzeichnet, daß dem Lichtleiter (20) und/oder der Kopiervorrichtung (1a) ein Lichtverstärker (22) zugeordnet ist.

9. Vorrichtung nach einem der Ansprüche 1 bis 8, dadurch gekennzeichnet, daß das Objektiv (4) bzw. der Lichtleiter (20) über einen Arm (5, 5a) an der Kopiervorrichtung (1, 1a) befestigt ist.

10. Vorrichtung nach Anspruch 9, dadurch gekennzeichnet, daß der Arm (5, 5a) und/oder der Umlenkspiegel (6, 6a) lösbar an der Kopiervorrichtung (1, 1a) befestigt sind.

## Claims

1. An apparatus for producing instant copies of arbitrary objects by utilizing an electro-photographic copying device (1) comprising a copying surface (2), a ground-glass-like finished Fresnell lens located in the area of said copying surface, and an objective (4) which can be attached to the copying device (1), the axis of said objective extending parallel to the plane of said copying surface (2) and said objective generating a picture of said object (3) in the plane of said Fresnell lens or, respectively, said copying surface (2) through a deflection mirror (6).

2. The apparatus for procuding instant copies of arbitrary objects by utilizing an electro-photographic copying device (1a) comprising a copying surface (2a), a ground-glass-like finished Fresnell lens located in the area of said copying surface and a light conductor (20) which can be attached to the copying device (1a), said light conductor including an objective (21) arranged at one end thereof and said light conductor generating a picture in the plane of the Fresnell lens or, respectively, the copying surface (2a) through a deflection mirror (6a).

3. The apparatus of claim 1, characterized in that the objective (4,21) is provided with means (7,8) for a variable focussing.

4. The apparatus of one of claims 1 to 3, characterized in that the object (4) is provided with means (8) for a variable aperture setting.

5. The apparatus of one of claims 1 to 4, charactered in that means (9) are provided for illuminating said objective.

6. The apparatus of one of claims 1 or 3 to 5, characterized in that the space between the objective (4) and the copying surface (2) is sealed against the entrance of light (enclosure).

7. The apparatus of one of claims 1 to 6, characterized in that a mirror means is arranged ahead of the objective (4) for turning the objects (3) to the copy about 180°.

8. The apparatus of claim 1, characterized in that a light amplifier (22) is associated with said light conductor (20) and/or the copying device (1a).

9. The apparatus of one of claims 1 to 8, characterized in that the objective (4) or, respectively, the light conductor (20) is mounted to the copying device (1, 1a) through an arm (5, 5a).

10. The apparatus of claim 9, characterized in that the arm (5, 5a) and/or the deflection mirror (6, 6a) are removably mounted to the copying device (1, 1a).

## Revendications

1. Dispositif pour la réalisation d'images instantanées d'objets quelconques, avec un copieur électrophotographique (1) comportant une glace de présentation (2) dans la région de laquelle est disposée une lentille de Fresnel dépolie du genre verre opale, et un objectif d'appareil photographique (4), qui peut être monté sur le copieur (1), dont l'axe s'étend parallèlement au plan de la glace de présentation (2) et qui reproduit l'objet (3), par l'intermédiaire d'un miroir de renvoi (6), dans le plan de la lentille de Fresnel ou de la glace de présentation (2).

2. Dispositif pour la réalisation d'images instantanées d'objets quelconques, avec un copieur électrophotographique (1a) comportant une glace de présentation (2a) dans la région de laquelle est disposée une lentille de Fresnel dépolie du genre verre opale, et un guide de lumière (20), qui peut être monté sur le copieur (1a), présente à une extrémité un objectif (21) et reproduit l'objet, par l'intermédiaire d'un miroir de renvoi (6a), dans le plan de la lentille de Fresnel ou de la glace de présentation (2a).

3. Dispositif selon la revendication 1, caractérisé en ce que l'objectif (4, 21) est doté d'un dispositif (7, 8) pour modifier le réglage de netteté.

4. Dispositif selon l'une quelconque des revendications 1 à 3, caractérisé en ce que l'objectif (4) est doté d'un dispositif (8) pour modifier l'ouverture du diaphragme.

5. Dispositif selon l'une quelconque des revendications 1 à 4, caractérisé en ce que des moyens (9) sont prévus pour éclairer l'objet.

6. Dispositif selon l'une quelconque des revendications 1 ou 3 à 5, caractérisé en ce que l'espace entre l'objectif (4) et la glace de présentation (2) est enfermé de manière étanche à la lumière (couverture 10).

7. Dispositif selon l'une quelconque des revendications 1 à 6, caractérisé en ce qu'un ensemble à miroir qui tourne de 180° les objets (3) à reproduire est disposé devant l'objectif (4).

8. Dispositif selon la revendication 2, caractérisé en ce qu'un amplificateur de lumière (22) est associé au guide de lumière (20) et/ou au copieur (1a).

9. Dispositif selon l'une quelconque des revendications 1 à 8, caractérisé en ce que l'objectif (4) ou le guide de lumière (20) est fixé sur le copieur (1, 1a) au moyen d'un bras (5, 5a).

10. Dispositif selon la revendication 9, caractérisé en ce que le bras (5, 5a) et/ou le miroir de renvoi (6, 6a) sont fixés de manière amovible sur le copieur (1, 1a).
